# EUROPÄISCHE PATENTSCHRIFT

(11) **EP 3 217 838 B1**
(45) Veröffentlichungstag und Bekanntmachung des Hinweises auf die Patenterteilung: **14.03.2018**
(21) Anmeldenummer: 15808075.4
(22) Anmeldetag: 13.11.2015
(51) Int. Cl.: A47B 5/00, A47B 5/04, A47C 7/70, B60N 3/00, B64D 11/06

(54) **KLAPPTISCH**
FOLDING TABLE
TABLETTE PLIANTE

(30) Priorität: 14.11.2014 AT 508352014
(43) Veröffentlichungstag der Anmeldung: 20.09.2017
(73) Patentinhaber: FACC AG, 4910 Ried im Innkreis (AT)
(72) Erfinder: HÖFTBERGER, Matthäus, 4680 Haag am Hausruck (AT); BERGER, Gerhard, 7422 Riedlingsdorf (AT); KONRAD, Wilfried, 4942 Gurten (AT)
(74) Vertreter: Sonn & Partner Patentanwälte
(86) Internationale Anmeldenummer: PCT/AT2015/050291
(87) Internationale Veröffentlichungsnummer: WO 2016/074013

(56) Entgegenhaltungen:
- CN-U- 203 472 620
- DE-A1- 19 935 762
- DE-C1- 3 624 156
- US-A1- 2010 326 331

## Beschreibung

Die Erfindung betrifft einen Klapptisch, insbesondere für ein Flugzeug, mit einem Rahmen vorzugsweise zum Einbau in einer Seitenverkleidung in dem Flugzeug, mit einer Trageinrichtung für eine Tischplatte, mit einer Verschiebeeinrichtung zum Verschieben der Trageinrichtung entlang des Rahmens aus einer Verstauposition in eine Ausziehposition, mit einer Klappeinrichtung zum Umklappen eines Tragelements der Trageinrichtung aus der Ausziehposition in eine Gebrauchsposition, und mit einer Antriebseinrichtung zum Unterstützen der Verschiebeeinrichtung beim Verschieben der Trageinrichtung aus der Verstauposition in die Ausziehposition.

Die US 2010/0326331 A1 offenbart einen Klapptisch für Flugzeuge, wobei zum Anheben des Klapptisches Seilzüge verwendet werden, welche von einer Federzugtrommel angetrieben werden.

Die DE 36 24 156 beschreibt einen Tisch mit einem Halter, an welchem eine Tischplatte längsverschiebbar und um eine Schwenkachse schwenkbar gehalten ist. Am Halter ist eine Antriebsvorrichtung angeordnet, die an der Tischplatte angreift und die Tischplatte in die Ausklappstellung bzw. zurück in die nicht gezeigte Einklappstellung klappen kann.

Die CN 203 472 620 U zeigt einen Klapptisch, der mit einer drehbar gelagerten Welle verbunden ist, wobei die Welle zwischen zwei Gleitschienen eines Rahmens geführt ist, wodurch eine vertikale Verschiebung ermöglicht wird.

Aus der EP 1 836 927 A1 ist ein schwenkbarer Tisch bekannt, welcher ein Untergehäuse und eine Tischplatte aufweist. Der Tisch ist von einer Staustellung, bei der die Tischplatte im Wesentlichen senkrecht im Untergehäuse angeordnet ist, in eine Nutzstellung verfahrbar, bei der die Tischplatte im Wesentlichen waagerecht oberhalb des Untergehäuses angeordnet ist und von diesem getragen wird. Das Herausziehen der Tischkonstruktion aus dem Untergestell wird durch nicht gezeigte Federn unterstützt.

Nachteilig an den bekannten Ausführungen von Klapptischen für Flugzeuge ist insbesondere, dass die Unterstützung der Ausziehbewegung ungenügend gelöst ist.

Im Stand der Technik (vgl. zB die DE 19 09 998) wurde insbesondere ein Zahnstangenantrieb vorgeschlagen, mit welchem das Anheben der Tischplatte an gegenüberliegenden Seiten synchronisiert vorgenommen wird. Der Zahnstangenantrieb wirkt mit einer Feder zusammen, mit welcher das Ausziehen der Tischplatte unterstützt wird. Dieser Antriebsmechanismus weist jedoch eine Reihe von Nachteilen auf. Zunächst weist die bekannte Ausführung einen hohen Platzbedarf auf, welcher den Bestrebungen der Hersteller nach einem größtmöglichen Raum für Passagiere zuwiderläuft. Ein weiterer Nachteil ist das vergleichsweise hohe Gewicht des Zahnstangenantriebs. Demgegenüber werden in der Flugzeugindustrie vielfältige Anstrengungen unternommen, das Gewicht der verbauten Komponenten im Sinne einer Reduktion des Treibstoffbedarfs zu verringern. Darüber hinaus wurde die Geräuschentwicklung beim Ausziehen des Tisches mitunter als störend empfunden. Weiters ist im Stand der Technik die Kraftunterstützung während des Ausziehvorganges nicht über den gesamten Ausziehvorgang gleichmäßig.

Zudem sind im Stand der Technik andersartige Ausführungen von verstellbaren Tischen bekannt geworden.

Die DE 199 35 762 A1 beschreibt eine ein- und ausfahrbare Gliederplatte für freitragende Ablagen. Auf Grund von form- und kraftschlüssigen Verbindungen der einzelnen Segmente ist die Gliederplatte in jedem beliebigen Winkel ausfahrbar. Durch schlagartiges Zusammenfallen soll das Verletzungsrisiko der Benutzer vermieden werden. Zum Ausfahren der Gliederplatte ist ein Antrieb vorgesehen, der über Antriebsräder und einen Antriebsriemen mit einer Spindel verbunden ist, mit welcher eine Druck-und Zugstrebe betätigt wird. Zudem ist ein Seilzug vorgesehen, welcher jedoch lediglich zum Zusammenspannen der Glieder ausgebildet ist.

Die US 2010/171350 A1 beschreibt einen Sitz mit einem schwenkbaren Bildschirm, welcher mittels einer Schiene seitlich am Sitz verstaut werden kann. Der Verschiebemechanismus weist Antriebsrollen auf. Zudem ist ein Seilzug als Teil einer Dämpfungseinrichtung vorgesehen.

WO 2008/141829 A1 betrifft eine Tischvorrichtung für einen Fahrzeugsitz, wobei die Tischvorrichtung einen Stützmechanismus und mindestens eine Tischplatte aufweist. Die Tischvorrichtung lässt sich über eine Gestängeanordnung im Wesentlichen horizontal verstauen, wenn sie nicht im Einsatz ist.

Demnach liegt der Erfindung die Aufgabe zugrunde, die Nachteile des Standes der Technik zu lindern bzw. zu beseitigen. Die Erfindung setzt sich daher insbesondere zum Ziel, den Klapptisch der eingangs angeführten Art mit konstruktiv einfachen Mitteln dahingehend zu verbessern, dass der Platzbedarf für den Verschiebe- und Klappmechanismus verringert und zugleich eine Gewichtsreduktion erzielt wird, wobei die Geräuschentwicklung gemindert und der Ausziehvorgang leichtgängig, gleichmäßig und zuverlässig unterstützt werden soll.

Diese Aufgabe wird durch einen Klapptisch mit den Merkmalen von Anspruch 1 gelöst. Bevorzugte Ausführungen sind in den abhängigen Ansprüchen angegeben.

Erfindungsgemäß weist die Antriebseinrichtung ein Linearantriebselement auf, welches über eine Seilzugeinrichtung mit der Verschiebeeinrichtung verbunden ist.

Demnach wird die Kraftübertragung zwischen dem Linearantriebselement und der Verschiebeeinrichtung für die Trageinrichtung mittels einer Seilzugeinrichtung bewirkt. Die Seilzugeinrichtung weist zumindest ein Zugseil auf, welches auf der einen Seite mit dem Linearantriebselement und auf der anderen Seite mit der Verschiebeeinrichtung verbunden ist. Durch Betätigung des Linearantriebselements wird über die Seilzugeinrichtung eine Zugkraft auf die Verschiebeeinrichtung aufgebracht, mit welcher die Verschiebeeinrichtung zusammen mit der Trageinrichtung für die Tischplatte in die Ausziehstellung verschoben wird. Danach kann das Tragelement mittels der Klappeinrichtung umgeklappt werden, so dass der Klapptisch in der Gebrauchslage vorliegt. Die erfindungsgemäße Ausgestaltung weist eine Reihe von Vorteilen gegenüber dem Stand der Technik auf. Zum einen kann die Seilzugeinrichtung besonders platzsparend innerhalb des Rahmens untergebracht werden. Ein weiterer Vorteil liegt darin, dass die Antriebskraft mittels des Zugseils auf besonders einfache Weise umgelenkt werden kann, wodurch die Platzverhältnisse im Einbauraum optimal ausgenützt werden können. Weiters kann das Gewicht der Antriebseinrichtung reduziert werden, wodurch eine Reduktion des Treibstoffbedarfs bei Flugzeugen erzielt werden kann. Vorteilhaft ist zudem, dass die Antriebsgeräusche gemindert werden können, wodurch dem Benutzer ein besonders hochwertiger Eindruck vermittelt wird.

Zur Erzielung einer zuverlässigen, stabilen und geräuscharmen Ausführung ist es günstig, wenn als Linearantriebselement eine Gasdruckfeder mit einem Kolbenelement vorgesehen ist, dessen Vorschub über die Seilzugeinrichtung auf die Verschiebeeinrichtung übertragbar ist. Der Aufbau solcher Gasdruckfedern ist im Stand der Technik allgemein bekannt, so dass hierauf nicht im Detail einzugehen ist. Die Gasdruckfeder weist zumindest ein Zylinderelement und ein relativ dazu verschiebliches Kolbenelement auf, wobei das Kolbenelement durch den Druck eines komprimierten Gases in Ausschubrichtung verschieblich ist. Die Verschiebung des Kolbenelements wird auf das Zugseil der Seilzugeinrichtung übertragen, so dass eine Zugkraft auf die Verschiebeeinrichtung aufgebracht wird. Zu diesem Zweck kann das freie Ende des Kolbenelements mit dem Rahmen verbunden sein, wogegen das Zylinderelement zusammen mit dem entsprechenden Ende des Zugseils verschieblich gelagert ist. Selbstverständlich könnte jedoch auch das Zylinderelement am Rahmen befestigt sein, wobei das Zugseil in diesem Fall mit dem Kolbenelement gekoppelt ist. Bei dieser Ausführung ist insbesondere von Vorteil, dass die Gasdruckfeder besonders platzsparend an dem Rahmen angeordnet werden kann. Weiters ist vorteilhaft, dass ein Dämpfungsmechanismus auf einfache Weise integrierbar ist. Besonders bevorzugt ist es, wenn die Gasdruckfeder mit einer Auslöseeinrichtung verbunden ist. Durch Betätigung der Auslöseeinrichtung wird das Kolbenelement aus dem Zylinderelement der Gasdruckfeder ausgefahren. Die Betätigung der Gasdruckfeder kann mittels Druckverschluss ("touch latch") erfolgen. Dabei wird der Verschiebemechanismus beim Niederdrücken der Verschiebeeinrichtung bzw. der Tischplatte verriegelt und beim erneuten Drücken wieder entriegelt. Demnach ist der Druckverschluss beim Verschieben des Klapptisches in die Verstauposition durch Niederdrücken der Trageeinrichtung bzw. der Tischplatte verriegelbar. In der Verstauposition ist der Druckverschluss durch einen Druck auf die Trageinrichtung bzw. die Tischplatte entriegelbar, wodurch der Klapptisch mit Unterstützung der Antriebseinrichtung in die Auszieh- bzw. Gebrauchsposition überführbar ist. Derartige Druckverschlüsse bzw. "Touch latches" sind im Stand der Technik bekannt, jedoch lediglich bei andersartigen Einrichtungen wie Türen von Elektrogeräten oder Möbeln. Beim Ausziehvorgang wird der lineare Vorschub des Kolbenelements auf das eine Ende des Seilzugs übertragen, welcher mit dem anderen Ende die Verschiebeeinrichtung für die Tischplatte anhebt. Nach Beendigung des Gebrauchs wird die Trageinrichtung mit der Tischplatte eingeklappt und in die Stauposition überführt, wobei die Gasdruckfeder mit Unterstützung des Eigengewichts der Tischplatte sowie der Trag-, Klapp- und Verschiebeeinrichtungen komprimiert wird.

Um die Trageinrichtung für die Tischplatte entlang einer vorgegebenen Bahn zwischen der Verstauposition und der Ausziehposition zu überführen, ist es günstig, wenn die Verschiebeeinrichtung je eine Führungseinrichtung an gegenüberliegenden Seiten des Rahmens aufweist, wobei die Führungseinrichtungen jeweils mit einem Zugseil der Seilzugeinrichtung verbunden sind. Durch die Anordnung der Führungseinrichtungen an gegenüberliegenden Seiten des Rahmens wird die Trageinrichtung für die Tischplatte beidseitig gehalten und geführt, wodurch die Ausziehbewegung besonders zuverlässig und leichtgängig gestaltet wird. Vorzugsweise weist die Antriebseinrichtung genau ein Linearantriebselement, insbesondere genau eine Gasdruckfeder, auf, welche mit genau zwei Seilzügen für die gegenüberliegenden Führungseinrichtungen gekoppelt ist. Die beiden Seilzüge sind bevorzugt so angeordnet, dass die Vorschubbewegung des Linearantriebselements in gleiche Verschiebungen der Verschiebeeinrichtungen an den gegenüberliegenden Seiten des Rahmens umgewandelt wird. Zu diesem Zweck kann die Seilzugeinrichtung einerseits mit dem Linearantriebselement bewegliche Rollen und andererseits am Rahmen unbeweglich angeordnete Rollen aufweisen, wobei die Seilzüge jeweils über eine mit dem Linearantriebselement bewegliche Rolle und eine am Rahmen unbeweglich angeordnete Rolle geführt sind.

Um die Verschiebeeinrichtung zuverlässig und geräuscharm zwischen der Verstauposition und der Ausziehposition zu verschieben, ist es bei einer bevorzugten Ausführungsvariante vorteilhaft, wenn die Führungseinrichtungen jeweils einen Führungsschlitten aufweisen, welcher in einer entsprechenden Führungsnut verschieblich ist. Die Seilzüge der Seilzugeinrichtung wirken mit den auf gegenüberliegenden Seiten des Rahmens angeordneten Führungsschlitten zusammen, an welchen die Trageinrichtung für die Tischplatte befestigt ist.

Gemäß einer besonders bevorzugten Ausführungsform ist vorgesehen, dass die Führungseinrichtungen jeweils eine mit dem Rahmen verbundene Führungsschiene und einen entlang der Führungsschiene beweglichen Führungsschlitten aufweisen, wobei zwischen einer Laufbahn der Führungsschiene und einer Laufbahn des Führungsschlittens Wälzkörper angeordnet sind, welche in Ausnehmungen eines Wälzkörperkäfigs aufgenommen sind.

Demnach weisen die Führungsschiene und der Führungsschlitten bei dieser Ausführungsform einander zugewandte Laufbahnen, d.h. Abrollflächen, für eine Mehrzahl von Wälzkörpern auf, welche mittels des Wälzkörperkäfigs in einem vorgegebenen Abstand zueinander angeordnet sind. Beim Verschieben der Trageinrichtung entlang des Rahmens wälzen die Wälzkörper auf der einen Seite an der Laufbahn der stationären Führungsschiene und auf der anderen Seite an der Laufbahn des beweglichen Führungsschlittens ab. Der Wälzkörperkäfig wird in Richtung der Längsverschiebung des Führungsschlittens mitgenommen. Demnach ist eine Roll- bzw. Wälzlagerung des Führungsschlittens vorgesehen. Vorzugsweise weist der Wälzkörperkäfig eine Vielzahl von Ausnehmungen mit Wälzkörpern in gleichen Abständen in Längsrichtung des Wälzkörperkäfigs auf. Die erfindungsgemäße Ausgestaltung der Führungseinrichtungen bringt insbesondere den Vorteil mit sich, dass die Führung der Trageinrichtung an gegenüberliegenden Längsseiten des Rahmens mit besonders geringem Spiel, d.h. insbesondere im Wesentlichen spielfrei, bewerkstelligt werden kann. Vorteilhafterweise kann so zuverlässig verhindert werden, dass eine einseitige bzw. außermittige Belastung der Tischplatte beim Auszieh- bzw. Verstauvorgang eine unerwünschte Verklemmung bzw. Verkantung des Führungsschlittens bewirkt. Dadurch können Fehlfunktionen des Klapptisches vermieden werden. Weiters wird der Verschleiß des Klapptisches reduziert. Dadurch können die Wartungs- bzw. Austauschintervalle erhöht werden, wodurch die Kosten für den Gebrauch des Klapptisches gesenkt werden können. Zudem können Gewichtseinsparungen erzielt werden. Schließlich ist vorteilhaft, dass die Geräuschentwicklung beim Ausziehen bzw. Verstauen des Klapptisches reduziert werden kann.

Aufgrund der präzisen Führung der gegenüberliegenden Führungsschlitten über die Wälzkörper sind die Führungseinrichtungen bei einer besonders bevorzugten Ausführungsform verbindungsfrei zueinander an gegenüberliegenden Seiten des Rahmens angeordnet. "Verbindungsfrei zueinander" bedeutet hier, dass eine steife Querverbindung zwischen den gegenüberliegenden Führungseinrichtungen fehlt. Ausgenommen davon ist freilich die Verbindung der Führungseinrichtungen über eine an der Trageinrichtung befestigte Tischplatte, welche sich über die Breite des Rahmens, quer zur Richtung der Längsverschiebung erstrecken kann. Aufgrund der Wälzlagerung der Führungsschlitten kann eine Verklemmung der Führungseinrichtungen durch einseitige Belastung auch ohne steife Verbindung zwischen den Führungseinrichtungen, insbesondere ohne Verbindungsstange oder Verbindungswelle, zuverlässig verhindert werden. Somit kann eine wesentliche Reduktion des Gesamtgewichts des Klapptisches erzielt werden.

Um die Wälzkörper zuverlässig in der gewünschten Position zu halten, ist es günstig, wenn der Wälzkörperkäfig derart zwischen der Führungsschiene und dem Führungsschlitten angeordnet ist, dass der Wälzkörperkäfig zwischen der Verstauposition und der Ausziehposition der Trageinrichtung im Wesentlichen die halbe Strecke des Führungsschlittens zurücklegt. Vorzugsweise ist der Wälzkörperkäfig im Wesentlichen mittig zwischen den Laufbahnen der Führungsschiene und des Führungsschlittens angeordnet. Demnach bewirkt eine Verschiebung des Führungsschlittens um eine bestimmte Strecke eine Bewegung des Wälzkörperkäfigs um im Wesentlichen die Hälfte der Strecke des Führungsschlittens.

Zur Anpassung des Wälzkörperkäfigs an die lineare Bewegung des Führungsschlittens ist es von Vorteil, wenn als Wälzkörperkäfig ein langgestrecktes Profilelement mit gegenüberliegenden Flanschen vorgesehen ist, an welchen die Ausnehmungen für die Wälzkörper ausgebildet sind. Vorzugsweise ist der Querschnitt des Profilelements in Richtung der Verschiebung des Führungsschlittens im Wesentlichen konstant. Die Flansche des Profilelements weisen Ausnehmungen in Form von Durchbrechungen auf, in denen die Wälzkörper angeordnet sind.

Um das Abwälzen der Wälzkörper zu ermöglichen, ist es günstig, wenn die Laufbahnen der Führungsschiene und des Führungsschlittens im Querschnitt bogenförmig, insbesondere kreisbogenförmig, gekrümmt sind. Der Querschnitt bezieht sich dabei auf eine Ebene senkrecht zur Längsverschiebung des Führungsschlittens.

Gemäß einer besonders bevorzugten Ausführung ist der Führungsschlitten über ein Drehgelenk, insbesondere einen Gelenkzapfen, mit der Trageinrichtung verbunden. Durch das Drehgelenk kann die Längsverschiebung des Führungsschlittens auf die Trageinrichtung übertragen werden. Das Drehgelenk verwirklicht zudem die Klappeinrichtung, mit welcher das Tragelement der Trageinrichtung von der Ausziehposition in die Gebrauchsposition umklappbar ist.

Um den Führungsschlitten präzise an der Führungsschiene zu lagern, ist es günstig, wenn als Wälzkörper Kugeln vorgesehen sind.

Hinsichtlich einer platzsparenden, konstruktiv einfachen und zuverlässigen Ausführung ist es günstig, wenn der Führungsschlitten eine Halterung für das Zugseil aufweist, wobei der Führungsschlitten mit der Halterung für das Zugseil entlang einer am Rahmen vorgesehenen Führungsnut verschieblich ist. Bei dieser Ausführung sind daher die Halterungen für die Zugseile in die Führungsschlitten integriert. Die Halterungen für die Zugseile an den Führungsschlitten können beispielsweise durch zylindrische Ausnehmungen ausgebildet sein, in welchen jeweils ein, am Ende des jeweiligen Zugseils befindlicher Zylinder angeordnet werden kann, so dass das Zugseil an dem Führungsschlitten fixiert wird. Die Führungsschlitten sind vorzugsweise im Wesentlichen in vertikaler Richtung entlang der Führungsnuten auf gegenüberliegenden Längsseiten des Rahmens verschieblich. Vorteilhafterweise kann so der Rahmen besonders schmal gestaltet werden. Dadurch kann der Platzbedarf für den Einbau des Klapptisches, beispielsweise in einer Seitenverkleidung oder Seitenlehne des Fahrgastsitzes, verringert werden oder es kann eine breitere Trageinrichtung verwendet werden, mit welcher die Halterung der Tischplatte besonders stabil gestaltet werden kann.

Wenn das Linearantriebselement in der Betriebsstellung in einer im Wesentlichen horizontalen Lage an einem unteren, im Wesentlichen in horizontaler Richtung erstreckten Rahmenelement des Rahmens angeordnet ist, kann das Linearantriebselement platzsparend am Rahmen untergebracht werden.

Zum Anheben der Trageinrichtung mit der Tischplatte in die Ausziehstellung sind die Führungseinrichtungen bevorzugt an seitlichen, im Wesentlichen in vertikaler Richtung erstreckten Rahmenelementen angeordnet, wobei der Vorschub des Linearantriebselements insbesondere in horizontaler Richtung mittels Umlenkrollen der Seilzugeinrichtung in einander entsprechende, im Wesentlichen vertikale Verschiebungen der Führungseinrichtungen entlang der seitlichen Rahmenelemente des Rahmens umwandelbar ist. Die Seilzugeinrichtung bietet daher insbesondere den Vorteil, dass die Vorschubrichtung des Linearantriebselements von der Richtung der Verschiebung der Verschiebeeinrichtung verschieden sein kann. Dadurch kann der Antriebs- und Verschiebemechanismus besonders platzsparend am Rahmen untergebracht werden. Bevorzugt weist der Rahmen ein unteres, im Wesentlichen horizontales Rahmenelement, in welchem das Linearantriebselement angeordnet ist, und zwei seitliche, im Wesentlichen vertikale Rahmenelemente auf, an welchen die Führungseinrichtungen für die Trageinrichtung gelagert sind. Demnach ist der Rahmen im Wesentlichen U-förmig ausgebildet, wobei die Trageinrichtung mit der Tischplatte durch das obere, offene Ende des Rahmens ausziehbar ist, bevor der bewegliche Teil der Trageinrichtung mit der Tischplatte seitlich in die Gebrauchsposition umklappbar ist.

Gemäß einer besonders bevorzugten Ausführung weist die Seilzugeinrichtung zumindest eine Übersetzungsrolle zur Erzielung einer Übersetzung zwischen dem Vorschub des Linearantriebselements und der Verschiebung der Verschiebeeinrichtung auf. Das Übersetzungsverhältnis zwischen der Verschiebung des Linearantriebselements und der Verschiebung der Verschiebeeinrichtung beträgt bevorzugt zwischen 2 und 5, insbesondere im Wesentlichen 3. Durch die Übersetzung der Antriebsbewegung kann die vom Linearantriebselement auf die Verschiebeeinrichtung aufzubringende Kraft reduziert werden. Weiters können durch die variabel wählbare Übersetzung bestehende, normierte Federn bzw. Dämpfungselemente für das Linearantriebselement verwendet werden. Vorzugsweise ist zumindest eine, insbesondere genau eine, Übersetzungsrolle für jede Seite des Klapptisches vorgesehen. Die Übersetzungsrollen sind bevorzugt mit dem Linearantriebselement gekoppelt, um dessen lineare Bewegung mitzumachen. Dadurch bilden die Seilzüge mit den Übersetzungsrollen einen Flaschenzug.

Es ist besonders vorteilhaft, wenn ein Dämpfungselement zur Dämpfung der Bewegung des Linearantriebselements vorgesehen ist. Dadurch kann ein gleichmäßiger Ausziehvorgang erreicht werden. Beispielsweise kann ein Dämpfungsmechanismus bereits in der Gasdruckfeder integriert sein.

Gemäß einer bevorzugten Ausführung ist ein gedämpfter Anschlag zwischen dem Rahmen und dem Linearantriebselement vorgesehen. Dadurch kann vorzugsweise zusätzlich zu dem gleichmäßigen Ausziehvorgang aufgrund des Dämpfungselements ein sanftes Erreichen der Ausziehposition erreicht werden, wobei zudem die Geräuschentwicklung weiter reduziert wird.

Die Erfindung wird nachstehend anhand eines in der Zeichnung dargestellten Ausführungsbeispiels, auf das sie jedoch nicht beschränkt sein soll, noch weiter erläutert. In der Zeichnung zeigt:
Fig. 1 eine schaubildliche Ansicht eines Ausschnitts eines Flugzeuges, wobei ein erfindungsgemäßer Klapptisch in ausgeklappter Gebrauchsposition im montierten Zustand an einer Seitenverkleidung des Flugzeugs ersichtlich ist;
Fig. 2a eine schaubildliche Ansicht des Klapptisches gemäß Fig. 1 (ohne die Tischplatte) vor der Montage an der Seitenverkleidung, wobei der Klapptisch in der unteren Verstauposition dargestellt ist;
Fig. 2b eine schaubildliche Ansicht des Klapptisches in einer um 90 mm ausgezogenen Position;
Fig. 2c eine schaubildliche Ansicht des Klapptisches in einer Ausziehposition;
Fig. 2d eine schaubildliche Ansicht des Klapptisches in der Gebrauchsposition;
Fig. 3a eine schaubildliche Ansicht einer Antriebs- und Verschiebeeinrichtung des Klapptisches gemäß Fig. 1, 2, welche in einer der Verstauposition des Klapptisches entsprechenden Stellung dargestellt ist;
Fig. 3b eine schaubildliche Ansicht der Antriebs- und Verschiebeeinrichtung gemäß Fig. 3a in einer Zwischenstellung;
Fig. 3c eine schaubildliche Ansicht der Antriebs- und Verschiebeeinrichtung gemäß Fig. 3a, 3b in einer der Auszieh- bzw. Gebrauchsposition des Klapptisches entsprechenden Stellung;
Fig. 4a die Antriebs- und Verschiebeeinrichtung gemäß Fig. 3a in der Ausziehposition, wobei zudem Führungseinrichtungen an den oberen Enden der Seilzüge ersichtlich sind;
Fig. 4b das Detail A aus Fig. 4a in vergrößerter Darstellung;
Fig. 4c das Detail B aus Fig. 4a in vergrößerter Darstellung;
Fig. 5a eine Draufsicht auf die Antriebs- und Verschiebeeinrichtung;
Fig. 5b das Detail C aus Fig. 5a in vergrößerter Darstellung;
Fig. 5c das Detail D aus Fig. 5a in vergrößerter Darstellung;
Fig. 6a eine schaubildliche Ansicht einer alternativen Ausführungsform der Trage- und Verschiebeeinrichtung des Klapptisches in der Verstauposition;
Fig. 6b eine schaubildliche Ansicht der Trage- und Verschiebeeinrichtung gemäß Fig. 3a in einer Zwischenstellung;
Fig. 6c eine schaubildliche Ansicht der Trage- und Verschiebeeinrichtung gemäß Fig. 3a, 3b in der Ausziehposition;
Fig. 7a die Führungseinrichtung der Ausführungsform gemäß Fig. 6a bis 6c in einer der Verstauposition entsprechenden Stellung;
Fig. 7b die Führungseinrichtung gemäß Fig. 7a in einer Zwischenstellung;
Fig. 7c die Führungseinrichtung gemäß Fig. 7a, 7b in der Ausziehposition; und
Fig. 8 eine Schnittansicht gemäß der Linie A-A in Fig. 7c.

In Fig. 1 ist ein Klapptisch 1 gezeigt, welcher in einer Seitenverkleidung 1' in einem Flugzeug 1" montiert ist. Fig. 1 zeigt den Klapptisch 1 in einer ausgeklappten Gebrauchsposition, wobei sich der Klapptisch 1, wie noch ausführlich beschrieben wird, vollständig innerhalb der Seitenverkleidung 1' verstauen lässt.

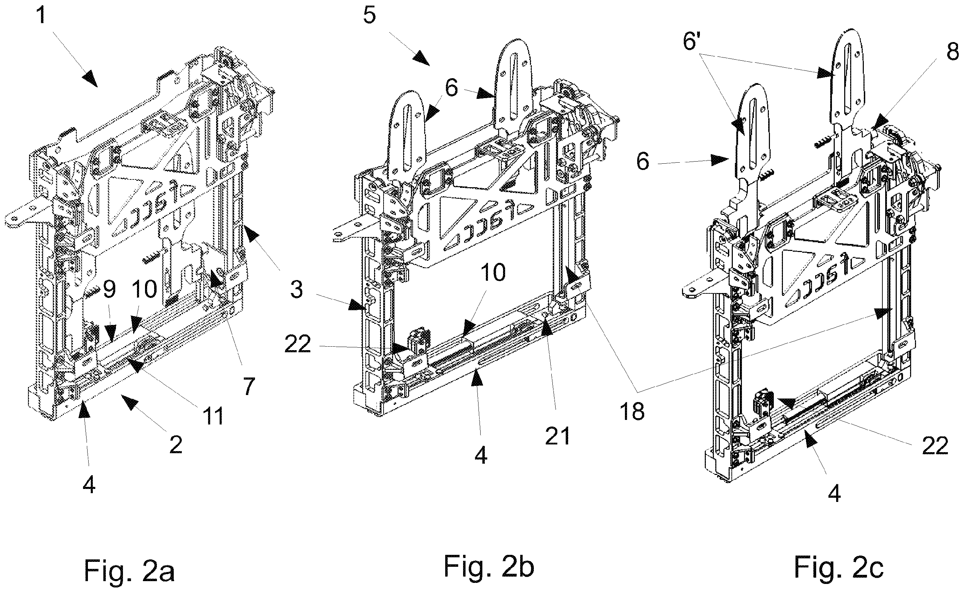

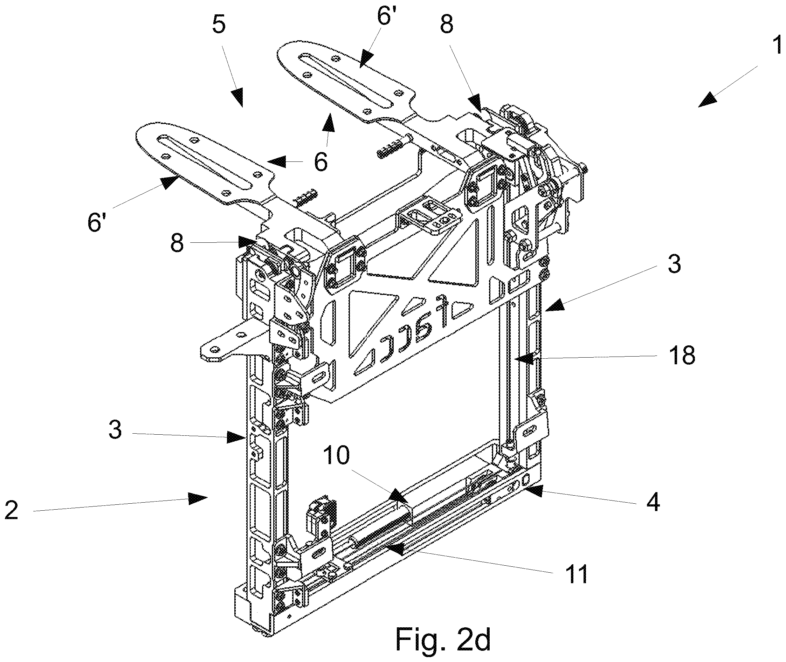

Wie aus Fig. 2 ersichtlich, weist der Klapptisch 1 einen im Wesentlichen U-förmigen Rahmen 2 auf, welcher in einem nicht gezeigten Gehäuse der Seitenverkleidung 1' montiert wird. Der Rahmen 2 setzt sich aus zwei seitlichen Rahmenelementen 3, welche in der Betriebsstellung im Wesentlichen vertikal bzw. senkrecht zur Bodenfläche des Flugzeugs angeordnet sind, und einem die seitlichen Rahmenelemente 3 verbindenden unteren Rahmenelement 4 zusammen, welches in der Betriebsstellung im Wesentlichen horizontal angeordnet ist. Der Klapptisch 1 weist eine Trageinrichtung 5 auf, an welcher eine in Fig. 1 gezeigte Tischplatte 5' montierbar ist. Die Trageinrichtung 5 weist ein verschwenkbares Tragelement 6 auf, welches in der gezeigten Ausführung durch zwei Tragflansche 6' gebildet ist. Die Tischplatte 5' ist an den Oberseiten der Tragflansche 6' befestigbar. Um den Klapptisch 1 aus der in Fig. 2a gezeigten Verstauposition in die in Fig. 2c gezeigte Ausziehposition zu bringen, ist eine Verschiebeeinrichtung 7 zum Verschieben der Trageinrichtung 5 in vertikaler Richtung entlang des Rahmens 2 vorgesehen. Um in weiterer Folge den Klapptisch 1 von der in Fig. 2c dargestellten Ausziehposition in die in Fig. 2d gezeigte Gebrauchsposition zu bringen, ist eine Klappeinrichtung 8 zum Umklappen des Tragelements 6 aus der Ausziehposition in die Gebrauchsposition vorgesehen. Das Tragelement 6 wird dabei vorzugsweise um im Wesentlichen 90° verschwenkt. Im einfachsten Fall ist die Klappeinrichtung 8 durch ein Gelenk zwischen dem verschwenkbaren Tragelement 6 für die Tischplatte 5' und einem unverschwenkbaren Halteelement der Trageinrichtung 5 gebildet. In der Verstauposition und in der Ausziehposition ist das Tragelement 6 für die Tischplatte 5' jeweils im Wesentlichen vertikal angeordnet, wobei das Tragelement bis zum Erreichen der finalen Ausziehposition gegen ein Umklappen gesperrt ist. Durch Umklappen des Tragelements 6 wird die im Wesentlichen horizontale Gebrauchsposition erreicht. Der Klapptisch 1 kann in umgekehrter Weise in der Seitenverkleidung 1' verstaut werden. Fig. 2b zeigt eine Zwischenstellung zwischen der Verstauposition und der Ausziehposition, bei welcher die Trageeinrichtung 5 um 90mm ausgezogen wurde.

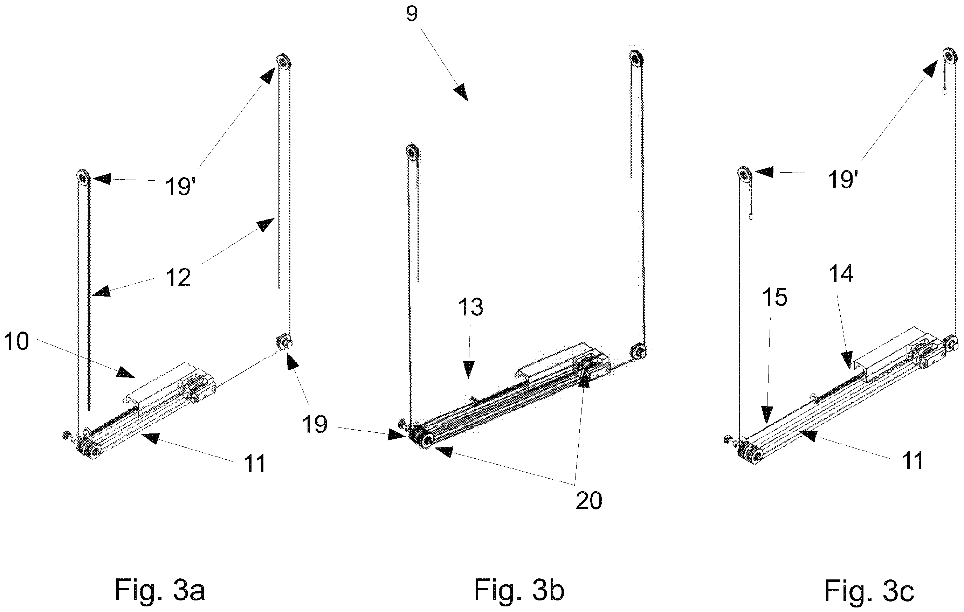

Wie aus Fig. 3a bis 3c weiters ersichtlich, ist eine Antriebseinrichtung 9 zum Unterstützen der Verschiebeeinrichtung 7 beim Verschieben der Trageinrichtung 5 aus der Verstauposition in die Ausziehposition vorgesehen. Dadurch wird das Ausziehen des Klapptisches 1 erleichtert. In der gezeigten Ausführung weist die Antriebseinrichtung 9 ein Linearantriebselement 10, d.h. ein entlang einer geradlinigen Bahn bewegliches Antriebselement, auf, welches über eine Seilzugeinrichtung 11 mit der Verschiebeeinrichtung 7 verbunden ist. Die Seilzugeinrichtung 11 weist zwei Zugseile 12 auf, welche als Kraftübertragungsmittel zwischen dem Linearantriebselement 10 und der Verschiebeeinrichtung 7 ausgebildet sind. Durch die Zugseile 12 kann eine Zugkraft in vertikaler Richtung auf die Verschiebeeinrichtung 7 aufgebracht werden, um die Verschiebeeinrichtung 7 und die damit verbundene Trageinrichtung 5 von der Verstauposition, vgl. Fig. 2a, in die Auszieh- bzw. Gebrauchsposition, vgl. Fig. 2c bzw. 2d, anzuheben.

Wie aus Fig. 3a bis 3c weiters ersichtlich, ist als Linearantriebselement 10 eine Gasdruckfeder 13 vorgesehen, welche in herkömmlicherweise ein gegenüber einem Zylinderelement bzw. Druckrohr 14 verschiebliches Kolbenelement 15 aufweist. Der Vorschub des Kolbenelements 15 der Gasdruckfeder 13 wird über die Seilzugeinrichtung 11 auf die Verschiebeeinrichtung 7 übertragen, wodurch diese gemeinsam mit der Tischplatte 5' nach oben gezogen wird.

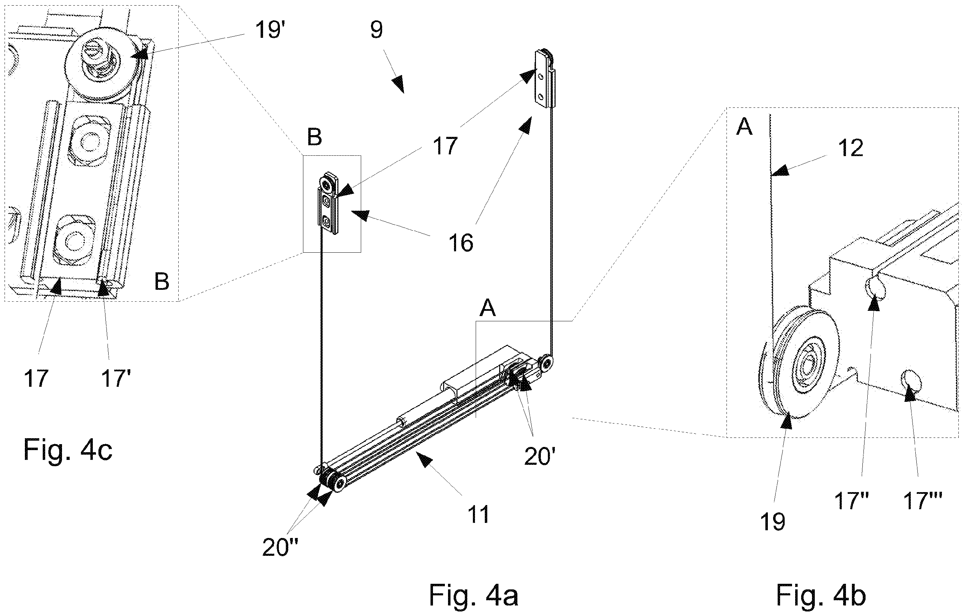

Wie aus Fig. 4 ersichtlich, weist die Verschiebeeinrichtung 7 je eine Führungseinrichtung 16 an den in Fig. 2a bis 2c gezeigten gegenüberliegenden seitlichen Rahmenelementen 3 des Rahmens 2 auf. Die Führungseinrichtungen 16 sind jeweils mit einem der beiden Zugseile 12 der Seilzugeinrichtung 11 verbunden, wobei die Zugseile 12 mittels ortsfester Rollen 19' um 180° umgelenkt sind. Die Zugseile 12 sind somit derart angelegt, dass der Vorschub des Linearantriebselements 10 eine Verschiebung der Führungseinrichtungen 16 bewirkt. Dabei wird sichergestellt, dass die Verschiebung auf der linken und der rechten Seite gleichmäßig erfolgt. Demnach ist die Ausziehbewegung der Verschiebeeinrichtung 7 an den gegenüberliegenden Seiten des Rahmens 2 miteinander synchronisiert.

Wie aus Fig. 4 weiters ersichtlich, weisen die Führungseinrichtungen 16 Führungsschlitten 17 auf, welche in entsprechenden Führungsnuten 18 (vgl. Fig. 2b) in vertikaler Richtung verschieblich gelagert sind. In der gezeigten Ausführung weisen die Führungsschlitten 17 jeweils eine Halterung 17' für das eine Ende des Zugseils 12 auf, wobei die anderen Enden der Zugseile 12 mit dem Linearantriebselement 10 gekoppelt sind. Als Halterungen 17' sind in der gezeigten Ausführung zylindrische Halteöffnungen am Führungsschlitten 17 vorgesehen, in denen korrespondierende zylindrische Elemente, die an den einen Enden der Zugseile 12 angeordnet sind, verklemmt werden. Die anderen Enden der Zugseile 12 sind an einer oberen Befestigungsstelle 17" bzw. an einer unteren Befestigungsstelle 17"' befestigt, welche gemeinsam mit dem Linearantriebselement 10 verschieblich sind. Die Führungsschlitten 17 mit den festgeklemmten Enden der Zugseile 12 werden beim Ausziehen entlang der Führungsnuten 18 verschoben, welche an den seitlichen Rahmenelementen 3 des Rahmen 2 ausgebildet sind (vgl. Fig. 2b).

Wie aus Fig. 2a bis 2c weiters ersichtlich, ist das Linearantriebselement 10 innerhalb des unteren, im Wesentlichen in horizontaler Richtung erstreckten Rahmenelementes 4 des Rahmens 2 angeordnet. Darüber hinaus laufen die Zugseile 12 über die in Fig. 3a bis 3c, Fig. 4a gezeigten 90°-Umlenkrollen 19 an gegenüberliegenden Enden des unteren Rahmenelements 4, so dass der Vorschub des Linearantriebselements 10 in horizontaler Richtung in einander entsprechende Verschiebungen der Führungsschlitten 17 entlang der Führungsnuten 18 an den seitlichen Rahmenelementen 3 des Rahmens 2 übertragen wird.

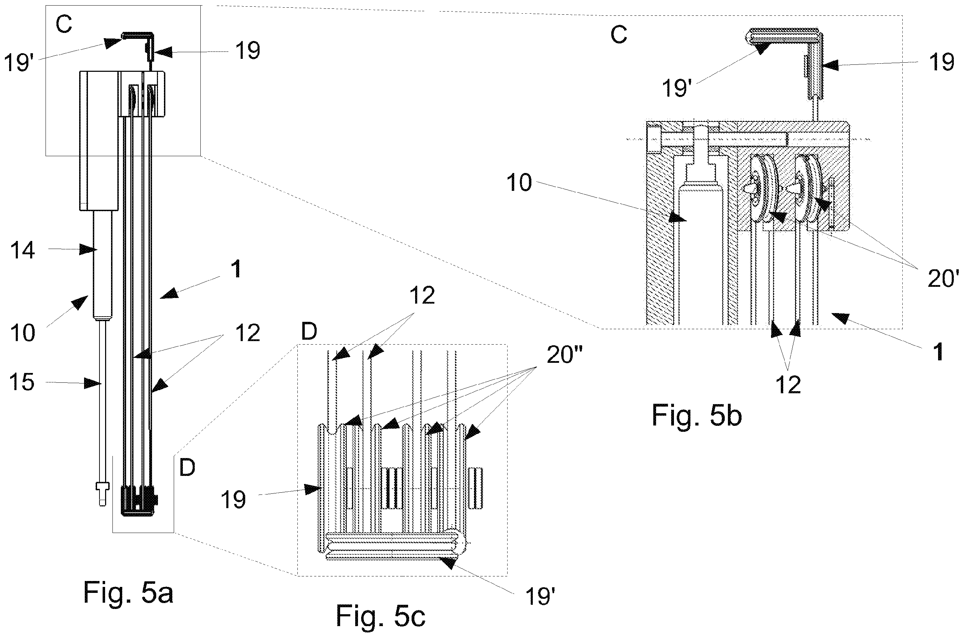

Wie aus Fig. 5 weiters ersichtlich, ist die Seilzugeinrichtung 11 zur Erzielung einer Übersetzung zwischen dem Vorschub des Linearantriebselements 10 und der Verschiebung der Verschiebeeinrichtung 7 eingerichtet. Zu diesem Zweck sind die Zugseile 12 zwischen dem Linearantriebselement 10 und den Führungseinrichtungen 16 über Übersetzungs- bzw. Umlenkungsrollen 20 geführt. In der gezeigten Ausführung sind zwei Übersetzungsrollen 20' mit dem Druckrohr 14 der Gasdruckfeder 13 gekoppelt, so dass die Übersetzungsrollen 20' die Vorschubbewegung der Gasdruckfeder 13 mitmachen. Demnach ist für jede Seite genau eine Übersetzungsrolle 20' vorgesehen, wodurch ein Flaschenzug gebildet wird. Darüber hinaus sind zwei Paare von Umlenkungsrollen 20'' am unteren Rahmenelement 4 gelagert, welche daher unabhängig von der Stellung der Gasdruckfeder 13 ortsfest angeordnet sind. Die außenliegende, an das Kolbenelement 15 angrenzende Umlenkungsrolle 20'' ist zugleich als 90°-Umlenkrolle 19 ausgebildet. Die Zugseile 12 laufen jeweils über eine mit dem Druckrohr 14 gekoppelte Übersetzungsrolle 20' und jeweils zwei am unteren Rahmenelement 4 angeordnete Umlenkungsrollen 20''. Dadurch wird für beide Zugseile dieselbe Übersetzung erzielt. Wie in Fig. 5 weiters ersichtlich, sind die Übersetzungsrollen 20' in einem Winkel zu einer vertikalen, parallel zur Längsrichtung des Linearantriebselements 10 verlaufenden Ebene angeordnet, so dass zwischen Ein- und Austritt der Zugseile 12 an den Übersetzungsrollen 20' ein horizontaler Abstand gebildet ist, welcher Abstand genau dem axialen Abstand entspricht, der zwischen den zwei, zu einem Zugseil 20 gehörenden, Umlenkungsrollen 20'' vorhanden ist.

Weiters ist in der Zeichnung (vgl. Fig. 2b) ein Druckverschluss 22 ("touch latch") ersichtlich, der durch Drücken auf die Trageeinrichtung 5 bzw. auf die Tischplatte 5' betätigt werden kann. In der Verstauposition (vgl. Fig. 2a) kann der Druckverschluss 22 durch einmaliges Drücken entriegelt werden, woraufhin der Klapptisch 1 mit Unterstützung des Linearantriebselements 10 ausgefahren wird bis die Auszieh- bzw. Gebrauchsposition erreicht wird. Beim Verstauen des Klapptisches 1 wird die Trageeinrichtung 5 bis in die Verstauposition geschoben, wobei der Druckverschluss 22 durch das Niederdrücken der Trageeinrichtung 5 bzw. der Tischplatte 5' verriegelt wird.

Wie aus Fig. 2b weiters ersichtlich, ist zudem ein gedämpfter Anschlag 21 zwischen dem Rahmen 2 und dem Linearantriebselement 10 vorgesehen. Der gedämpfte Anschlag 21 weist vorzugsweise ein Feder- oder Gummielement auf.

In der Ausführungsform des Klapptisches 1 gemäß der Fig. 1 bis 5 ist eine Gleitlagerung zwischen dem beweglichen Führungsschlitten 17 und der Führungsnut 18 vorgesehen.

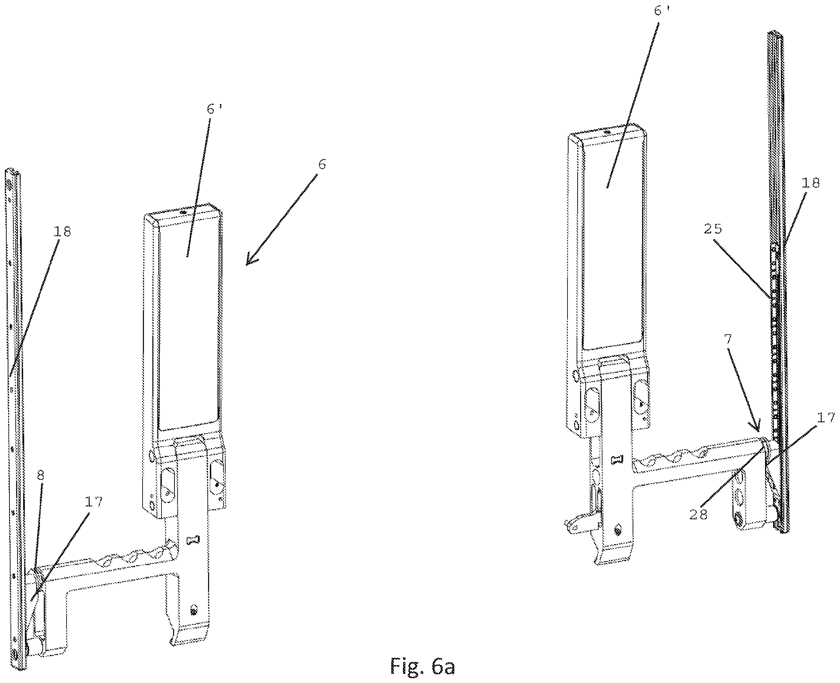

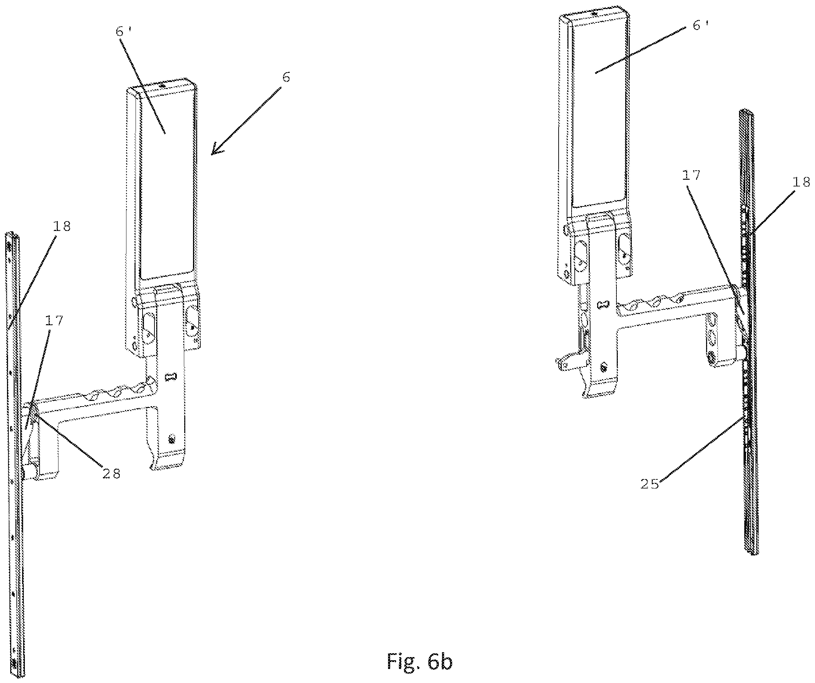

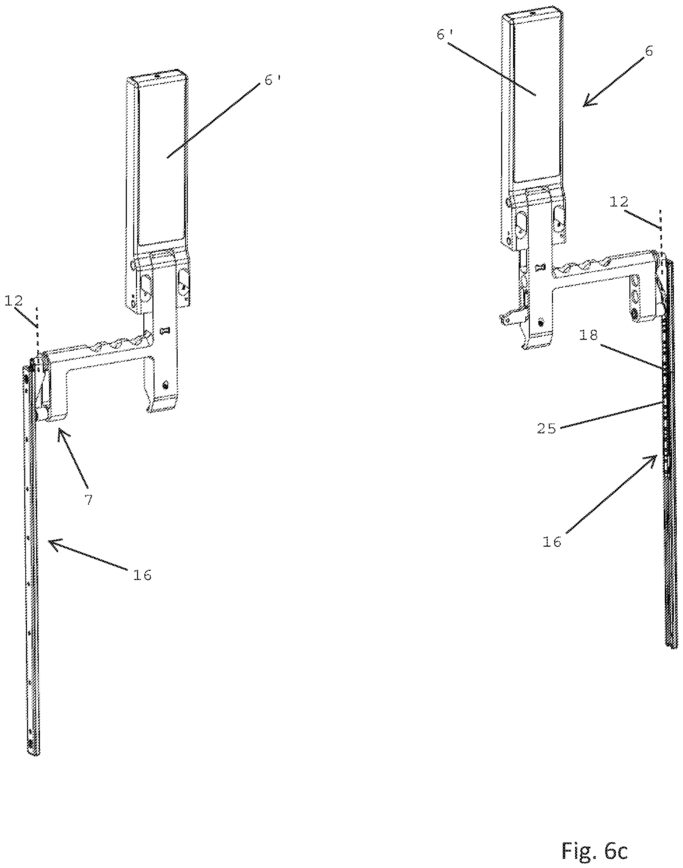

In den Fig. 6a bis 6c, 7a bis 7c und 8 ist eine alternative Ausführungsform der Verschiebe- und Trageinrichtung 7, 5 vorgesehen.

Bei dieser Ausführungsform weisen die Führungseinrichtungen 16 Führungsschlitten 17 auf, welche entlang von Führungsschienen 18 am Rahmen 2 in vertikaler Richtung verschieblich gelagert sind. Beim Ausziehen bzw. Verstauen des Klapptisches 1 sind die Führungsschienen 18 stationär, die Führungsschlitten 17 in Längsrichtung beweglich am Rahmen 2 angeordnet.

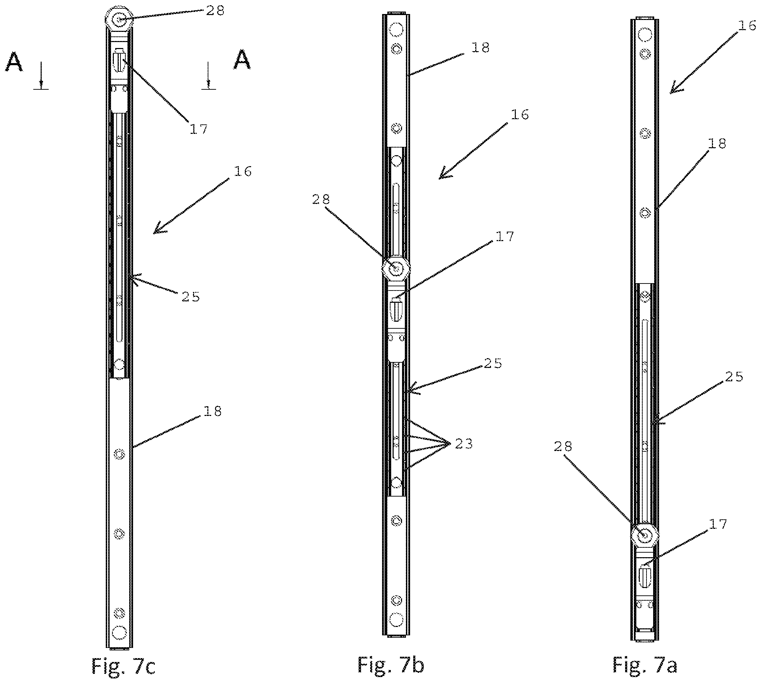

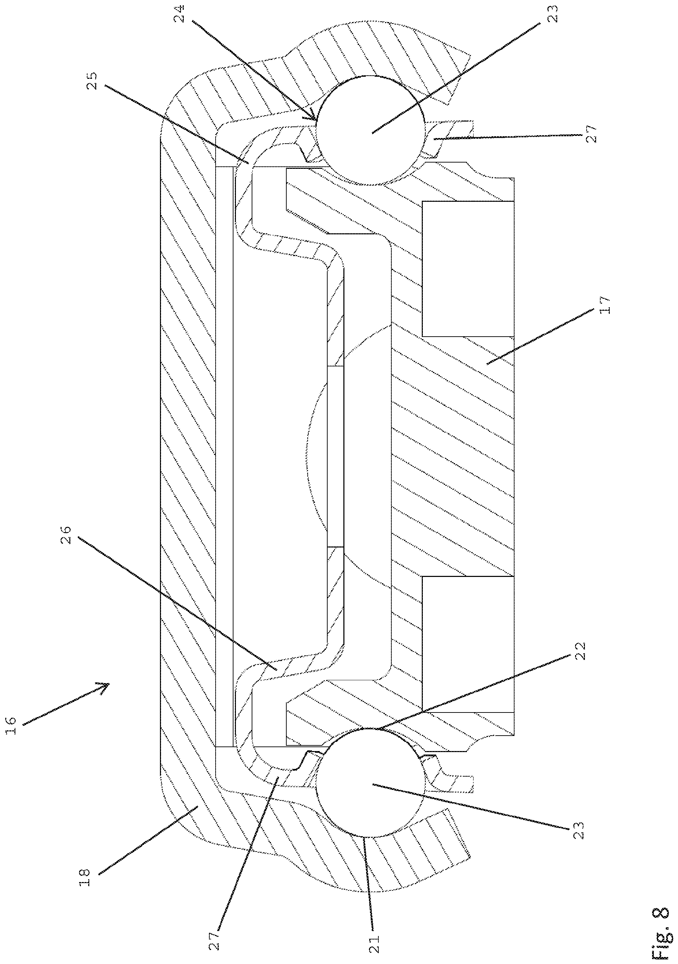

Wie aus Fig. 7a bis 7c, im Detail aus Fig. 8, ersichtlich, sind zwischen einer Laufbahn 21 der Führungsschiene 18 und einer Laufbahn 22 des Führungsschlittens 17 eine Vielzahl von Wälzkörpern 23 angeordnet. Die Wälzkörper 23 sind in Ausnehmungen 24 eines Wälzkörperkäfigs 25 gehalten. Die Ausnehmungen 24 weisen im Wesentlichen denselben Durchmesser wie die Wälzkörper 23 auf. Der Wälzkörperkäfig 25 ist im Wesentlichen mittig zwischen der Führungsschiene 18 und dem Führungsschlitten 17 angeordnet. Beim Ausziehvorgang legt der Wälzkörperkäfig 25 zwischen der Verstauposition (vgl. Fig. 7a) und der Ausziehposition (vgl. Fig. 7c) der Trageinrichtung 5 im Wesentlichen die halbe Strecke des Führungsschlittens 17, in dieselbe Bewegungsrichtung zurück. Als Wälzkörper 23 sind in der gezeigten Ausführung Kugeln vorgesehen. Die Laufbahnen 21, 22 der Führungsschiene 18 bzw. des Führungsschlittens 17 sind im Querschnitt entsprechend kreisbogenförmig gekrümmt.

Wie aus Fig. 7a bis 7c, 8 weiters ersichtlich, ist als Wälzkörperkäfig 25 ein langgestrecktes bzw. längliches Profilelement 26 mit gegenüberliegenden Flanschen 27 vorgesehen. An den Flanschen 27 sind die Ausnehmungen 24 für die Wälzkörper 23 ausgebildet. Aus den Fig. 7a bis 7c ist zudem ersichtlich, dass die Führungsschlitten 17 über Gelenkzapfen 28 mit dem Tragelement 6 der Trageinrichtung 5 verbunden sind.

## Patentansprüche

1. Klapptisch (1), insbesondere für ein Flugzeug, mit einem Rahmen (2) vorzugsweise zum Einbau in einer Seitenlehne oder in einer Seitenverkleidung (1') in dem Flugzeug, mit einer Trageinrichtung (5) für eine Tischplatte (5'), mit einer Verschiebeeinrichtung (7) zum Verschieben der Trageinrichtung (5) entlang des Rahmens (2) aus einer Verstauposition in eine Ausziehposition, mit einer Klappeinrichtung (8) zum Umklappen eines Tragelements (6) der Trageinrichtung (5) aus der Ausziehposition in eine Gebrauchsposition, und mit einer Antriebseinrichtung (9) zum Unterstützen der Verschiebeeinrichtung (7) beim Verschieben der Trageinrichtung (5) aus der Verstauposition in die Ausziehposition, **dadurch gekennzeichnet, dass** die Antriebseinrichtung (9) ein Linearantriebselement (10) aufweist, welches über eine Seilzugeinrichtung (11) mit der Verschiebeeinrichtung (7) verbunden ist.

2. Klapptisch (1) nach Anspruch 1, **dadurch gekennzeichnet, dass** als Linearantriebselement (10) eine Gasdruckfeder (13) mit einem Kolbenelement (15) vorgesehen ist, dessen Vorschub über die Seilzugeinrichtung (11) auf die Verschiebeeinrichtung (7) übertragbar ist.

3. Klapptisch (1) nach Anspruch 1 oder 2, **dadurch gekennzeichnet, dass** die Verschiebeeinrichtung (7) je eine Führungseinrichtung (16) an gegenüberliegenden Seiten des Rahmens (2) aufweist, wobei die Führungseinrichtungen (16) jeweils mit einem Zugseil (12) der Seilzugeinrichtung (11) verbunden sind.

4. Klapptisch (1) nach Anspruch 3, **dadurch gekennzeichnet, dass** die Führungseinrichtungen (16) jeweils eine mit dem Rahmen (2) verbundene Führungsschiene (18) und einen entlang der Führungsschiene (18) beweglichen Führungsschlitten (17) aufweisen, wobei zwischen einer Laufbahn (21) der Führungsschiene (18) und einer Laufbahn (22) des Führungsschlittens (17) Wälzkörper (23) angeordnet sind, welche in Ausnehmungen (24) eines Wälzkörperkäfigs (25) aufgenommen sind.

5. Klapptisch (1) nach Anspruch 4, **dadurch gekennzeichnet, dass** der Führungsschlitten (17) eine Halterung (17') für das Zugseil (12) aufweist, wobei der Führungsschlitten (17) mit der Halterung (17') für das Zugseil (12) entlang einer am Rahmen (2) vorgesehenen Führungsnut (18) verschieblich ist.

6. Klapptisch (1) nach einem der Ansprüche 1 bis 5, **dadurch gekennzeichnet, dass** das Linearantriebselement (10) in der Betriebsstellung in einer im Wesentlichen horizontalen Lage an einem unteren, im Wesentlichen in horizontaler Richtung erstreckten Rahmenelement (4) des Rahmens (2) angeordnet ist.

7. Klapptisch (1) nach einem der Ansprüche 3 bis 6, **dadurch gekennzeichnet, dass** die Führungseinrichtungen (16) an seitlichen, im Wesentlichen in vertikaler Richtung erstreckten Rahmenelementen (3) angeordnet sind, wobei der Vorschub des Linearantriebselements (10) insbesondere in horizontaler Richtung mittels Umlenkrollen (19) der Seilzugeinrichtung (11) in einander entsprechende, im Wesentlichen vertikale Verschiebungen der Führungseinrichtungen (16) entlang der seitlichen Rahmenelemente (3) des Rahmens (2) umwandelbar ist.

8. Klapptisch (1) nach einem der Ansprüche 1 bis 7, **dadurch gekennzeichnet, dass** die Seilzugeinrichtung (11) zumindest eine Übersetzungsrolle (20') zur Erzielung einer Übersetzung zwischen dem Vorschub des Linearantriebselements (10) und der Verschiebung der Verschiebeeinrichtung (7) aufweist.

9. Klapptisch (1) nach einem der Ansprüche 1 bis 8, **dadurch gekennzeichnet, dass** ein Dämpfungselement zur Dämpfung der Bewegung des Linearantriebselements (10) vorgesehen ist.

10. Klapptisch (1) nach einem der Ansprüche 1 bis 9, **dadurch gekennzeichnet, dass** ein gedämpfter Anschlag (21) zwischen dem Rahmen (2) und dem Linearantriebselement (10) vorgesehen ist.

## Claims

1. Folding table (1), in particular for an aeroplane, comprising a frame (2) that is preferably to be installed in an armrest or in a side panel (1') in the aeroplane, comprising a support means (5) for a tray table (5'), comprising a displacement means (7) for displacing the support means (5) along the frame (2) from a stowed position into a pulled-out position, comprising a folding means (8) for unfolding a support element (6) of the support means (5) from the pulled-out position into a use position, and comprising a drive means (9) for supporting the displacement means (7) when the support means (5) is being displaced from the stowed position into the pulled-out position, **characterised in that** the drive means (9) has a linear drive element (10), which is connected to the displacement means (7) via a cable pulley means (11).

2. Folding table (1) according to claim 1, **characterised in that** a gas pressure spring (13) having a piston element (15) is provided as the linear drive element (10), the forward movement of which piston element can be transferred to the displacement means (7) via the cable pulley means (11).

3. Folding table (1) according to either claim 1 or claim 2, **characterised in that** the displacement means (7) has a guide means (16) on each opposing side of the frame (2), the guide means (16) in each case being connected to a pulling cable (12) of the cable pulley means (11).

4. Folding table (1) according to claim 3, **characterised in that** the guide means (16) each have a guide rail (18) connected to the frame (2) and a guide carriage (17) that is movable along the guide rail (18), rolling elements (23) being arranged between a track (21) of the guide rail (18) and a track (22) of the guide carriage (17), which elements are received in recesses (24) in a rolling element cage (25).

5. Folding table (1) according to claim 4, **characterised in that** the guide carriage (17) has a holding device (17') for the pulling cable (12), it being possible for the guide carriage (17) having the holding device (17') for the pulling cable (12) to be displaced along a guide groove (18) provided in the frame (2).

6. Folding table (1) according to any of claims 1 to 5, **characterised in that**, in the operating position, the linear drive element (10) is arranged in a substantially horizontal position on a lower frame element (4) of the frame (2), which element extends substantially in the horizontal direction.

7. Folding table (1) according to any of claims 3 to 6, **characterised in that** the guide means (16) are arranged on lateral frame elements (3) that extend substantially in the vertical direction, it being possible for the forward movement of the linear drive element (10), in particular in the horizontal direction, to be converted, by means of deflection rollers (19) of the cable pulley means (11), into mutually corresponding, substantially vertical displacements of the guide means (16) along the lateral frame elements (3) of the frame (2).

8. Folding table (1) according to any of claims 1 to 7, **characterised in that** the cable pulley means (11) has at least one translation roller (20') for translating between the forward movement of the linear drive element (10) and the displacement of the displacement means (7).

9. Folding table (1) according to any of claims 1 to 8, **characterised in that** a damping element is provided for damping the movement of the linear drive element (10).

10. Folding table (1) according to any of claims 1 to 9, **characterised in that** a damped stop (21) is provided between the frame (2) and the linear drive element (10).

## Revendications

1. Table pliante (1), plus particulièrement pour un avion, avec un châssis (2) de préférence destiné à être monté dans un accoudoir ou dans un panneau latéral (1') dans l'avion, avec un dispositif de support (5) pour une plaque de table (5'), avec un dispositif de coulissement (7) pour le coulissement du dispositif de support (5) le long du châssis (2), d'une position de rangement vers une position déployée, avec un dispositif de pliage (8) pour le pliage d'un élément de support (6) du dispositif de support (5) de la position déployée vers une position d'utilisation, et avec un dispositif d'entraînement (9) pour le soutien du dispositif de coulissement (7) lors du coulissement du dispositif de support (5) de la position de rangement vers la position déployée, **caractérisée en ce que** le dispositif d'entraînement (9) comprend un élément d'entraînement linéaire (10), qui est relié avec le dispositif de coulissement (7) par l'intermédiaire d'un dispositif de traction à câble (11).

2. Table pliante (1) selon la revendication 1, **caractérisée en ce que**, en tant qu'élément d'entraînement linéaire (10), un ressort à pression de gaz (13) avec un élément à piston (15) est prévu, dont l'avance peut être transmise par l'intermédiaire du dispositif de traction par câble (11) vers le dispositif de coulissement (7).

3. Table pliante (1) selon la revendication 1 ou 2, **caractérisée en ce que** le dispositif de coulissement (7) comprend un dispositif de guidage (16) sur chaque côté opposé du châssis (2), les dispositifs de guidage (16) étant reliés chacun avec un câble de traction (12) du dispositif de traction par câble (11).

4. Table pliante (1) selon la revendication 3, **caractérisée en ce que** les dispositifs de guidage (16) comprennent chacun un rail de guidage (18) relié avec le châssis (2) et un chariot de guidage (17) mobile le long du rail de guidage (18), moyennant quoi, entre une bande de roulement (21) du rail de guidage (18) et une bande de roulement (22) du chariot de guidage (17), sont disposés des corps à rouleaux (23) qui sont logés dans des évidements (24) d'une cage de corps de rouleaux (25).

5. Table pliante (1) selon la revendication 4, **caractérisée en ce que** le chariot de guidage (17) comprend un support (17') pour le câble de traction (12), le chariot de guidage (17) coulissant, avec le support (17') pour le câble de traction (12), le long d'une rainure de guidage (18) prévue sur le châssis (2).

6. Table pliante (1) selon l'une des revendications 1 à 5, **caractérisée en ce que** l'élément d'entraînement linéaire (10) est disposé, dans la position de fonctionnement, dans une position globalement horizontale, au niveau d'un élément de châssis (4), s'étendant globalement dans la direction horizontale, du châssis (2).

7. Table pliante (1) selon l'une des revendications 3 à 6, **caractérisée en ce que** les dispositifs de guidage (16) sont disposés au niveau d'éléments de châssis (3) latéraux s'étendant dans la direction verticale, l'avance de l'élément d'entraînement linéaire (10), plus particulièrement dans la direction horizontale, pouvant être convertie au moyen de rouleaux de renvoi (19) du dispositif de traction par câble (11) dans des coulissements correspondants, globalement verticaux, des dispositifs de guidage (16), le long des éléments de châssis latéraux (3) du châssis (2).

8. Table pliante (1) selon l'une des revendications 1 à 7, **caractérisée en ce que** le dispositif de traction par câble (11) comprend au moins un rouleau de transmission (20') pour l'obtention d'un rapport de transmission entre l'avance de l'élément d'entraînement linéaire (10) et le coulissement du dispositif de coulissement (7).

9. Table pliante (1) selon l'une des revendications 1 à 8, **caractérisée en ce qu'**un élément d'amortissement est prévu pour l'amortissement du mouvement de l'élément d'entraînement linéaire (10).

10. Table pliante (1) selon l'une des revendications 1 à 9, **caractérisée en ce qu'**une butée amortie (21) est prévue entre le châssis (2) et l'élément d'entraînement linéaire (10).
